(19) Europäisches Patentamt

European Patent Office

Office européen des brevets

(11) **EP 1 030 461 A2**

(12) **EUROPÄISCHE PATENTANMELDUNG**

(43) Veröffentlichungstag:
23.08.2000 Patentblatt 2000/34

(51) Int. Cl.⁷: **H04B 1/74**

(21) Anmeldenummer: 00101510.6

(22) Anmeldetag: 26.01.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.01.1999 DE 19903003**

(71) Anmelder:
**SIEMENS AKTIENGESELLSCHAFT**
**80333 München (DE)**

(72) Erfinder:
• **Perbandt, Adalbert**
 **80796 München (DE)**
• **Sarfert, Thomas**
 **85598 Baldham (DE)**
• **Schmidt, Joachim**
 **81667 München (DE)**

(54) **Verfahren zur Herstellung eines Ersatz-Verbindungsweges für einen in einem Kommunikationsnetz bestehenden Normal-Verbindungsweg**

(57) Zur Herstellung eines Ersatz-Verbindungsweges für einen zwischen mindestens zwei Endpunkten (TP1, TP2) in einem Kommunikationsnetz bestehenden Normal-Verbindungsweg werden zunächst diejenigen Verbindungselemente (C, G) des Ersatz-Verbindungsweges aktiviert, die zusätzlich zu auch im Normal-Verbindungsweg liegenden Verbindungselementen (A, D, E, F, H, Z) allein im Ersatz-Verbindungsweg vorhanden sind, woraufhin dann diejenigen, im Normal-Verbindungsweg wirksam geschalteten Verbindungselemente (A, D, F, H), die vom Normal-Verbindungsweg zum Ersatz-Verbindungsweg umschaltbar sind, deaktiviert und daraufhin für den Ersatz-Verbindungsweg aktiviert werden.

FIG 1

**Beschreibung**

Die Erfindung bezieht sich auf ein Verfahren zur Herstellung eines Ersatz-Verbindungsweges für einen zwischen mindestens zwei Endpunkten in einem Kommunikationsnetz bestehenden Normal-Verbindungsweg, wobei jeder Verbindungsweg über eine Mehrzahl von sich gegebenenfalls ein- oder mehrfach verzweigenden Verbindungselementen mit Durchschalte- bzw. Verbindungsfunktionen verläuft und wobei der Ersatz-Verbindungsweg einzelne Verbindungselemente enthalten kann, die auch im Normal-Verbindungsweg enthalten sind.

Der Übergang von einem Normal-Verbindungsweg in einem Kommunikationsnetz zu einem Ersatz-Verbindungsweg ist in den Fällen angezeigt, daß ein Verbindungselement oder mehrere Verbindungselemente des betreffenden Normal-Verbindungsweges gestört sind oder aber, daß der betreffende Verbindungsweg unterbrochen ist, wie z.B. infolge von irgendwelchen Bauarbeiten. Aber auch für die Durchführung von Wartungsarbeiten in einzelnen Verbindungselementen des Kommunikationsnetzes ist es erforderlich, von einem bestehenden Normal-Verbindungsweg zu einem Ersatz-Verbindungsweg zu wechseln, in welchem dann wenigstens einige Verbindungselemente der im Normal-Verbindungsweg genutzten Verbindungselemente nicht mehr für ihre eigentliche Übertragungsaufgabe genutzt werden.

Zur Herstellung eines Ersatz-Verbindungsweges für einen in einem Kommunikationsnetz bestehenden Normal-Verbindungsweg ist man bisher so vorgegangen, daß die Konstellationen bzw. Strukturen des Normal-Verbindungsweges und des Ersatz-Verbindungsweges sowie die Überlappungen der beiden Verbindungswege individuell analysiert wurden und daß von dieser Analyse ausgehend dann die verschiedenen Fälle für ein Umschalten individuell festgelegt wurden. Diese Vorgehensweise hat sich insbesondere bei komplexen Verbindungswegen als nicht zufriedenstellend erwiesen, da es vorkommen konnte, daß die Festlegung der einzelnen Elemente nicht zutreffend bzw. nicht optimal war.

Der Erfindung liegt demgemäß die Aufgabe zugrunde, einen Weg zu zeigen, wie bei einem Verfahren der eingangs genannten Art auf relativ einfache Weise die zu einem Ersatz-Verbindungsweg, der an die Stelle eines in einem Kommunikationsnetz bestehenden Normal-Verbindungsweges genutzt werden soll, gehörenden Verbindungselemente festgelegt und bei Bedarf aktiviert werden können.

Gelöst wird die vorstehend aufgezeigte Aufgabe bei einem Verfahren der eingangs genannten Art erfindungsgemäß dadurch,

a) daß zunächst diejenigen Verbindungselemente des Ersatz-Verbindungsweges aktiviert werden, die zusätzlich zu auch im Normal-Verbindungsweg liegenden Verbindungselementen allein im Ersatz-Verbindungsweg vorhanden sind,

b) daß sodann diejenigen im Normal-Verbindungsweg wirksam geschalteten Verbindungselemente deaktiviert werden, die vom Normal-Verbindungsweg zum Ersatz-Verbindungsweg umschaltbar sind, und

c) daß daraufhin die unter b) genannten Verbindungselemente für den Ersatz-Verbindungsweg aktiviert werden.

Die Erfindung bringt den Vorteil mit sich, daß auf relativ einfache Weise und besonders schnell ein Ersatz-Verbindungsweg für einen Normal-Verbindungsweg in einem Kommunikationsnetz hergestellt werden kann, ohne daß es einer aufwendigen Analyse der Konstellationen bzw. Strukturen der verschiedenen Verbindungswege bedarf.

Zweckmäßigerweise werden nach der zuvor aufgezeigten Herstellung des Ersatz-Verbindungsweges die allein im Normal-Verbindungsweg genutzten Verbindungselemente deaktiviert. Dadurch ist dann sichergestellt, daß in dem Kommunikationsnetz nur noch zum Ersatz-Verbindungsweg gehörende Verbindungselemente aktiviert sind, so daß die zuvor im Normal-Verbindungsweg genutzten Verbindungselemente, die nunmehr deaktiviert sind, überprüft oder gewartet werden können.

Vorzugsweise werden Angaben über die Einsatzmöglichkeiten des jeweiligen Verbindungselements im Normal-Verbindungsweg und/oder im Ersatz-Verbindungsweg, insbesondere für die Durchführung von Mengenoperationen, in einer die Aktivierung und Deaktivierung der betreffenden Verbindungselemente steuernden Steuereinrichtung festgehalten, und die Herstellung eines Ersatz-Verbindungsweges für einen bestehenden Normal-Verbindungsweg wird durch die Steuereinrichtung unter Heranziehung dieser Angaben gesteuert. Diese Maßnahme bringt den Vorteil mit sich, daß die genannte Steuerung unter Ausführung von relativ einfachen Mengenoperationen durchgeführt werden kann, deren Mengenelemente durch die jeweils zu berücksichtigenden Verbindungselemente im Zuge des jeweiligen Verbindungsweges gegeben sind.

In vorteilhafter Weise gibt die zuvor genannte Steuereinrichtung aus den genannten Angaben im Zuge der Herstellung eines Ersatz-Verbindungsweges für einen bestehenden Normal-Verbindungsweg über eine zentrale Befehlsabgabeeinrichtung Schaltbefehle zur entsprechenden Ansteuerung der jeweiligen Verbindungselemente ab. Dies führt zu einer besonders einfachen Ansteuerung der einzelnen Verbindungselemente.

Vorzugsweise werden die genannten Angaben in einer dem jeweiligen Verbindungselement zugehörigen Teilsteuereinrichtung der genannten Steuereinrichtung festgehalten, und ein die Herstellung eines Ersatz-Verbindungswege für einen bestehenden Normal-Verbindungsweg bewirkender Schaltbefehl wird von einer zentralen Befehlsabgabeeinrichtung an die in Frage kommenden Teilsteuereinrichtungen abgegeben. Dadurch ergibt sich der Vorteil einer besonders einfachen dezentralen Ansteuerung der einzelnen Verbindungselemente.

Anhand von Zeichnungen wird die Erfindung nachstehend beispielsweise näher erläutert.

Fig. 1     zeigt anhand eines einfaches Beispiels einen zwischen zwei Endpunkten in einem Kommunikationsnetz bestehenden Normal-Verbindungsweg.

Fig. 2     zeigt in derselben Netzfiguration, wie sie in Fig. 1 dargestellt ist, einen den Normal-Verbindungsweg ersetzender Ersatz-Verbindungsweg.

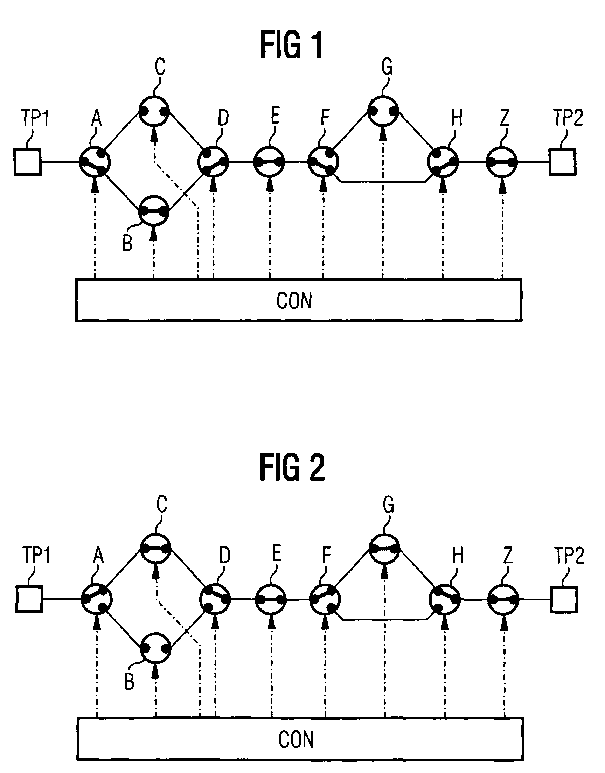

Fig. 1 zeigt ein einfaches Beispiel eines Kommunikationsnetzes, welches aus einzelnen Verbindungselementen A, B, C, D, E, F, G, H und Z besteht, die jeweils über Durchschalte-bzw. Verbindungsfunktionen verfügen und die auf ihre Aktivierung hin in dem Kommunikationsnetz Übertragungswege verfügbar machen. Von den vorstehend betrachteten Verbindungselementen A bis H und Z, die im englischen auch als cross connects bezeichnet werden, sind die beiden Verbindungselemente A und Z jeweils mit einem Endpunkt TP1 bzw. TP2 verbunden. Zwischen diesen beiden Endpunkten TP1 und TP2 verläuft gemäß Fig. 1 ein Normal-Verbindungsweg über die Verbindungselemente A, B, D, E, F, H, Z. Die beiden in Fig. 1 noch vorgesehenen Verbindungselemente C und G sind bei dem Beispiel gemäß Fig. 1 nicht in dem Normal-Verbindungsweg enthalten.

Für die Ansteuerung der in Fig. 1 dargestellten Verbindungselemente d.h. für deren Aktivierung bzw. Deaktivierung ist eine Steuereinrichtung CON vorgesehen, die, wie nachstehend noch erläutert werden wird, Angaben über die Einsatzmöglichkeiten der einzelnen Verbindungselemente A bis H, Z im Normal-Verbindungsweg und/oder in einem Ersatz-Verbindungsweg enthält und die anhand dieser Angaben Schaltbefehle an die einzelnen Verbindungselemente zu deren Aktivierung bzw. Deaktivierung abzugeben gestattet. Es sei an dieser Stelle angemerkt, daß in Abweichung von den gerade erwähnten Verhältnissen die genannten Angaben in einer dem jeweiligen Verbindungselement zugehörigen Teilsteuereinrichtung der Steuereinrichtung CON festgehalten werden können und daß ein von einer zentralen Befehlsabgabeeinrichtung abgegebener Schaltbefehl an die in Frage kommenden Teilsteuereinrichtungen zur Aktivierung bzw. Deaktivierung der jeweiligen Verbindungselemente genutzt werden kann.

Bevor auf die gerade angedeuteten Steuerungsmaßnahmen näher eingegangen wird, sei zunächst noch kurz Fig. 2 betrachtet. In Fig. 2 ist dieselbe Netzkonfiguration gezeigt, wie sie in Fig. 1 dargestellt ist; allerdings ist in Fig. 2 nicht mehr der Normal-Verbindungsweg zwischen den Endpunkten TP1 und TP2 aktiviert, sondern es ist vielmehr ein Ersatz-Verbindungsweg dafür hergestellt, der in Anlehnung an den englischen Begriff "Shadow" auch als Shadow-Pfad bezeichnet wird. Dieser Ersatz-Verbindungsweg umfaßt die Verbindungselemente A, C, D, E, F, G, H und Z. Im vorliegenden Fall ist damit lediglich das Verbindungselement B nicht mehr in diesem Verbindungsweg enthalten; es ist vielmehr deaktiviert.

Um nun das Verfahren gemäß der Erfindung besser verständlich machen zu können, werden nachstehend die Angaben über die Einsatzmöglichkeiten des jeweiligen Verbindungselementes A bis H, Z im Normal-Verbindungsweg und/oder im Ersatz-Verbindungsweg in der Steuereinrichtung CON betrachtet. Zunächst ist jedoch anzumerken, daß ein Normal-Verbindungsweg bzw. operationaler Pfad und ein dafür herzustellender Ersatz-Verbindungsweg bzw. Shadow-Pfad zwischen denselben, mindestens zwei Endpunkten, also gemäß Fig. 1 und 2 zwischen den Endpunkten TP1 und TP2 bestehen bzw. herzustellen sind.

Die erwähnten Angaben, die in der Steuereinrichtung CON bezüglich jedes Normal-Verbindungsweges und jedes dazu gehörenden Ersatz-Verbindungsweges festgehalten sind, umfassen eine Reihe von unterschiedlichen Mengenangaben. Diese Angaben werden nachstehend bezüglich des in Fig. 1 und 2 gezeigten Kommunikationsnetzes angegeben.

1. Als Menge Mop wird die Menge der Elemente bzw. Verbindungselemente im Normal-Verbindungsweg bzw. operationalen Pfad betrachtet; sie ist gegeben durch die Beziehung:

$$Mop = E.A/B + E.B + E.D/B + E.E + E.F/H + E.H/F + E.Z$$

Dabei ist mit E. jeweils ein Element bzw. Verbindungselement bezeichnet, und der/die nachfolgende(n) Buchstabe(n) gibt das bzw. geben die Verbindungselement(e) gemäß Fig. 1 und 2 an, auf die sich das betreffende Mengenelement bezieht. So bezeichnet z.B. E.A/B ein Element bzw. Verbindungselement A, das eine Verbindung zum Verbindungselement B herzustellen erlaubt.

2. Als Menge Msha wird die Menge der Elemente bzw. Verbindungselemente betrachtet, die im Ersatz-Verbindungsweg bzw. im Shadow-Pfad liegen; sie ist gegeben durch die Beziehung:

3

$$Msha = E.A/C + E.C + E.D/C + E.E + E.F/G + E.G + E.H/G + E.Z.$$

Diese Verbindungselemente sind in Fig. 2 als die bei dem angegebenen Beispiel zum Ersatz-Verbindungsweg gehörenden Verbindungselemente abgegeben.

3. Als sogenannte kritische Menge Mcrit von Verbindungselementen im Normal-Verbindungsweg und im Ersatz-Verbindungsweg wird die Menge derjenigen Verbindungselemente betrachtet, die alternativ im Normal-Verbindungsweg und im Ersatz-Verbindungsweg aktiviert sind bzw. die vom Normal-Verbindungsweg zum Ersatz-Verbindungsweg umschaltbar sind. Bezogen auf die Fig. 1 und 2 sind dies die Verbindungselemente A, D, F und H. In einer Mengenangabe ausgedrückt heißt dies, daß die kritische Menge der Verbindungselemente Mcrit gegeben ist durch die Beziehung:

$$Mcrit = E.A/B + E.A/C, E.D/B + E.D/C + E.F/G + E.F/H + E.H/F + E.H/G$$

Die kritische Menge Mcrit der Elemente bzw. Verbindungselemente läßt sich aufteilen in eine kritische Menge Mopcrit, das ist die kritische Menge der im Normal-Verbindungsweg bzw. operationalen Pfad enthaltenen Elemente bzw. Verbindungselemente, und in eine kritische Menge Mshacrit, das ist die kritische Menge der Elemente bzw. Verbindungselemente, die in der Menge Msha enthalten ist. Die Menge Mopcrit ist im vorliegenden Fall gegeben durch die Beziehung:

$$Mopcrit = E.A/B + E.D/B + E.F/H + E.H/F,$$

und die Menge Mshacrit ist gegeben durch die Beziehung:

$$Mshacrit = E.A/C + E.D/C + E.F/G + E.H/G.$$

4. Als eine identische Menge Mident von Elementen bzw. Verbindungselementen des Normal-Verbindungsweges bzw. operationalen Pfades und des Ersatz-Verbindungsweges bzw. Shadow-Pfades wird die Menge der Elemente betrachtet, die durch die Beziehung

$$Mident = E.E + E.Z$$

gegeben ist.

Die beiden Verbindungselemente E und Z sind zwischen den Endpunkten TP1 und TP2 also sowohl im Normal-Verbindungsweg als auch im Ersatz-Verbindungsweg in jedem Fall enthalten.

5. Als Restmenge der Elemente bzw. Verbindungselemente des Normal-Verbindungsweges bzw. des operationalen Pfades Mopr wird die jenige Menge der Elemente bzw. Verbindungselemente angesehen, die nach der Beziehung

$$Mopr = Mop - (Mcrit + Mident)$$

übrigbleiben. Bei dem betrachteten Beispiel ist dies lediglich das Element E.B. Dies bedeutet, daß im vorliegenden Fall lediglich das Verbindungselement B von den im Normal-Verbindungsweg bzw. operationalen Pfad benutzten Verbindungselementen übrigbleibt, welches im Ersatz-Verbindungsweg nicht genutzt wird.

6. Unter der Menge Mshar wird bezüglich des Ersatz-Verbindungsweges bzw. Shadow-Pfades diejenige Menge der Elemente bzw. Verbindungselemente verstanden, die sich aus der Beziehung

$$Mshar = Msha - (Mcrit + Mident)$$

ergeben. Im vorliegenden Fall sind dies die Elemente E.C und E.G. Die zugehörigen Verbindungselemente C und G sind also diejenigen Verbindungselemente, die von den Verbindungselementen, die im Ersatz-Verbindungsweg genutzt sind, lediglich in diesem Ersatz-Verbindungsweg genutzt werden, nicht aber auch im Normal-Verbindungsweg.

Nachdem zuvor alle Angaben näher betrachtet worden sind, die der Steuereinrichtung CON über die Einsatzmöglichkeiten der einzelnen Verbindungselemente im Normal-Verbindungsweg und/oder im Ersatz-Verbindungsweg zwischen wenigstens zwei Endpunkten im Kommunikationsnetz zur Verfügung stehen, wird für den gemäß Fig. 1 bestehenden Normal-Verbindungsweg zwischen den beiden Endpunkten TP1 und TP2 in dem dargestellten Kommunikationsnetz ein Ersatz-Verbindungsweg zwischen diesen beiden Endpunkten TP1, TP2 dadurch aufgebaut, daß von der Steuereinrichtung CON zunächst diejenigen Verbindungselemente des Ersatz-Verbindungsweges aktiviert werden, die zusätzlich zu auch im Normal-Verbindungsweg liegenden Verbindungselementen allein im Ersatz-Verbindungsweg vorhanden sind. Dies bedeutet, daß die Steuereinrichtung CON in diesem Fall die Elemente der Restmenge Mshar aktiviert.

Sodann werden diejenigen im Normal-Verbindungsweg wirksam geschalteten Verbindungselemente deaktiviert, die vom Normal-Verbindungsweg zum Ersatz-Verbindungsweg umschaltbar sind. Dazu steuert die Steuereinrichtung CON die Verbindungselemente an bzw. deaktiviert sie, die durch die kritische Menge Mopcrit erfaßt sind.

Im Anschluß daran werden die zuvor genannten Verbindungselemente für den Ersatz-Verbindungsweg aktiviert, was bedeutet, daß die Steuereinrichtung CON die Verbindungselemente gemäß der kritischen Menge Mshacrit aktiviert.

Im vorstehenden ist erläutert worden, wie ein Ersatz-Verbindungsweg für einen zwischen mindestens zwei Endpunkten in einem Kommunikationsnetz bestehenden Normal-Verbindungsweg unter Heranziehung von Mengenoperationen in der Steuereinrichtung CON hergestellt werden kann. Dabei dürfte ersichtlich geworden sein, daß die Herstellung des betreffenden Ersatz-Verbindungsweges sehr schnell erfolgen kann, so daß praktisch keine störende Unterbrechung zwischen den beiden Endpunkten auftritt, die normalerweise über den Normal-Verbindungsweg verbunden sind.

Ergänzend zu den vorstehend erläuterten Verfahrensschritten können noch nach Herstellung des Ersatz-Verbindungsweges die allein im Normal-Verbindungsweg genutzten Verbindungselemente deaktiviert werden. Die Steuereinrichtung CON greift dazu auf die Restmenge Mopr von Elementen zurück, das ist im vorliegenden Fall das Element E.B, also das Verbindungselement B.

Dieses Verbindungselement B ist dann für mögliche Wartungs-bzw. Reparaturarbeiten verfügbar.

Abschließend sei noch angemerkt, daß mit dem vorstehend erläuterten Beispiel zwar eine sehr einfache Konfiguration des Kommunikationsnetzes angenommen worden ist. Es ist jedoch darauf hinzuweisen, daß die Prinzipien der vorliegenden Erfindung selbstverständlich auch bei viel komplexeren Netzen in gleicher Weise anwendbar sind, um jeweils für einen zwischen wenigstens zwei Endpunkten in dem betreffenden Netz vorhandenen Normal-Verbindungsweg einen Ersatz-Verbindungsweg schnell aktivieren zu können. Dabei ist zu berücksichtigen, daß ganz generell in den Fällen, in denen Verbindungselemente im Ersatz-Verbindungsweg verwendet werden, die im Normal-Verbindungsweg nicht enthalten sind, dann zusätzlich zu den Verbindungselementen genutzt werden, die nach den oben erläuterten Verfahrensschritten genutzt werden.

**Patentansprüche**

1. Verfahren zur Herstellung eines Ersatz-Verbindungsweges für einen zwischen mindestens zwei Endpunkten in einem Kommunikationsnetz bestehenden Normal-Verbindungsweg, wobei jeder Verbindungsweg über eine Mehrzahl von sich gegebenenfalls ein- oder mehrfach verzweigenden Verbindungselementen mit Durchschalte- bzw. Verbindungsfunktionen verläuft und wobei der Ersatz-Verbindungsweg einzelne Verbindungselemente enthalten kann, die auch im Normal-Verbindungsweg enthalten sind,
**dadurch gekennzeichnet**,

a) daß zunächst diejenigen Verbindungselemente (C, G) des Ersatz-Verbindungsweges aktiviert werden, die zusätzlich zu auch im Normal-Verbindungsweg liegenden Verbindungselementen (A, D, E, F, H, Z) allein im Ersatz-Verbindungsweg vorhanden sind,
b) daß sodann diejenigen im Normal-Verbindungsweg wirksam geschalteten Verbindungselemente (A, D, F, H) deaktiviert werden, die vom Normal-Verbindungsweg zum Ersatz-Verbindungsweg umschaltbar sind, und
c) daß daraufhin die unter b) genannten Verbindungselemente (A, D, F, H) für den Ersatz-Verbindungsweg aktiviert werden.

2. Verfahren nach Anspruch 1, **dadurch gekennzeichnet**, daß nach Herstellung des Ersatz-Verbindungsweges die allein im Normal-Verbindungsweg genutzten Verbindungselemente (B) deaktiviert werden.

3. Verfahren nach Anspruch 1 oder 2, **dadurch gekennzeichnet**, daß Angaben über die Einsatzmöglichkeiten des jeweiligen Verbindungselements (A bis H, Z) im Normal-Verbindungsweg und/oder im Ersatz-Verbindungsweg, insbesondere für die Durchführung von Mengenoperationen, in einer die Aktivierung und Deaktivierung der betreffenden Verbindungselemente steuernden Steuereinrichtung (CON) festgehalten werden und daß die Herstellung eines Ersatz-Verbindungsweges für einen bestehenden Normal-Verbindungsweg durch die Steuereinrichtung (CON) unter Heranziehung dieser Angaben gesteuert wird.

4. Verfahren nach Anspruch 3, **dadurch gekennzeichnet**, daß die Steuereinrichtung (CON) aus den genannten Angaben im Zuge der Herstellung eines Ersatz-Verbindungsweges für einen bestehenden Normal-Verbindungsweg über eine zentrale Befehlsabgabeeinrichtung Schaltbefehle zur entsprechenden Ansteuerung der jeweiligen Verbindungselemente abgibt.

5. Verfahren nach Anspruch 3, **dadurch gekennzeichnet**, daß die genannten Angaben in einer dem jeweiligen Verbindungselement (A bis H, Z) zugehörigen Teilsteuereinrichtung der genannten Steuereinrichtung festgehalten werden und daß ein die Herstellung eines Ersatz-Verbindungsweges für einen bestehenden Normal-Verbindungsweg bewirkender Schaltbefehl von einer zentralen Befehlsabgabeeinrichtung an die in Frage kommenden Teilsteu- ereinrichtungen abgegeben wird.

# FIG 1

# FIG 2